# EUROPEAN PATENT APPLICATION

(11) **EP 4 560 584 A1**
(43) Date of publication of application: **28.05.2025**
(21) Application number: 23212146.7
(22) Date of filing: 24.11.2023
(51) Int. Cl.: G06V 10/764

(54) **METHOD FOR TRAINING AN INTERPRETABLE MODEL**

(71) Applicant: Ummon HealthTech, 71570 Romanèche-Thorins (FR)
(72) Inventor: VINÇON, Nathan, 91440 Bures-sur-Yvette (FR)
(74) Representative: Fidal Innovation

(57) **Abstract**

A method for training an interpretable model trained to deliver, as an output, a prediction regarding a physiological state or a biologically or a clinically relevant characteristic of a patient, the method comprising:
> the training comprising:
∘ A. Determining a feature characterizing the prediction of a black-box model,
∘ B. Injecting said plurality of images in a first interpretable submodel,
∘ C. Injecting said at least one feature together with said plurality of images in said first interpretable submodel,
∘ D. Obtaining, as an output, said prediction,
∘ E. Determining a residual between the predictions,
∘ F. Injecting said residual, said plurality of medical images and at least one feature characterizing the prediction of said black-box model into another interpretable submodel to obtain another residual,
∘ G: aggregating said first and other interpretable submodels, and
∘ H: iteratively performing steps F and G until a criterion is met.

## Description

### FIELD OF THE INVENTION

The present invention relates to a method for training a machine learning-based model. More specifically, it relates to a method for training an interpretable model to characterize a biomarker of a biological tissue.

The invention has a particular application - without being limited to it - in the field of cancer detection and/or cancer therapies.

### BACKGROUND OF THE INVENTION

In the medical field, a machine learning-based model can be trained with medical data - such as medical images - to help answering a medical question and then implemented on a medical data to answer the medical question. The model is generally trained according to one or more specific labels which can be divided into different classes. The label(s) may be directed to a biological, clinical, histologic and/or clinicohistologic characteristic of the inputted image. Generally, the model is trained to output a prediction, where the prediction may be a binary output regarding if the inputted image corresponds to the label or not, in which case the label is divided into two classes "yes" or "no" (or "0" or "1"). The prediction may also be a probability regarding if the inputted image corresponds to the label or not.

Following the output of the model, the medical question can be answered by a specialist since it gives him insights about the characteristic of the inputted image.

The medical data can be a medical image such as a histopathological image showing tissue sections stained and analysed with a microscope by a pathologist to highlight features related to diseases from the tissue. These images may be used for cancer diagnosis and/or for determining a response to a cancer treatment.

The machine learning-based model discussed here typically are deep learning model such as artificial neural networks model, decision tree model, support-vector machine model, Bayesian network model and/or regression analysis model. While these models may be efficient for predicting the output answering the medical question, they take the form of a black box.

Then, a drawback of such existing models is that the output is neither interpretable nor explainable. Hence, when answering the medical question based on the output of the deep learning-based model, the pathologist may not be able to verify if the output is correct and/or to understand why said output has been outputted by the deep learning based model.

The invention thus aims to answer at least partially to the above-mentioned technical problem.

### BRIEF SUMMARY OF THE INVENTION

Thus, the invention relates to A method for training an interpretable model, said interpretable model being trained to deliver, as an output, a prediction regarding a physiological state or a biologically or a clinically relevant characteristic of a patient, based on a medical image representing a biological tissue of the patient, the prediction characterizing a predefined outcome, the method comprising:
> Providing a plurality of medical images of the biological tissue,
> Training a black-box model, said black-box model being a deep learning model, said training being performed by injecting a plurality of medical images into said black-box model, wherein said black-box model is trained to deliver, as an output, said prediction, said prediction being a reference score, wherein said reference score characterizes a propensity of the biological tissue to be associated with said outcome,
> Training said interpretable model, said interpretable being a rule-based classification model, said interpretable model being trained to deliver, as an output, said prediction, wherein said prediction is an interpretable score corresponding to said reference score, and wherein said training of said interpretable model comprising:
   ∘ A. Determining at least one feature characterizing the prediction of said black-box model,
   ∘ B. Injecting said plurality of medical images in a first interpretable submodel,
   ∘ C. Injecting said at least one feature together with said plurality of images in said first interpretable submodel,
   ∘ D. Obtaining, as an output, said interpretable score,
   ∘ E. Determining a residual between the interpretable score and the reference score,
   ∘ F. Injecting said residual, said plurality of medical images and at least one feature characterizing the prediction of said black-box model into another interpretable submodel to obtain another residual,
   ∘ G: aggregating said first and other interpretable submodels, and
   ∘ H: iteratively performing steps F and G until a criterion is met, wherein at each iteration, the residual injected in the currently trained interpretable submodel corresponds to the residual obtained at the previous iteration,
> Storing the trained second classification model.

Thanks to these provisions,
According to different aspects, it is possible to provide the one and / or the other of the characteristics below taken alone or in combination.:
In an embodiment, prior to being injected in the black-box and submodel(s), the medical images are divided into tiles.

In an embodiment, A score is associated to each tile of the medical images injected in the interpretable submodel(s), each score being aggregated to obtain the output of each interpretable submodels.

In an embodiment, the outcome comprises:
> A gene mutational status,
> a gene presence,
> - a variant in a sequence of nucleotides of a gene,
> - a group of variants,
> - a gene ontology mutational status,
> - a gene pathways mutational status related to the gene,
> - a predictive and/or diagnostic morphological signature of a drug or a disease,
> - a clinical outcome indicating if the patient will die or survive after a treatment,
> - a clinicohistological outcome indicating if there will be a relapse after a disease treatment, and/or
> A histological outcome indicating if a disease will have spread or disappeared after treatment.

In an embodiment, wherein the criterion is a percentage of explainability that is met, for example 80%, a stagnation in the obtained predictions, i.e. if the residual does not increase more than a predefined percentage between two consecutive iterations, and/or if a statistical function (such as BIC or AIC) does no longer decline, said statistical function being associated with the iterative predictions of the interpretable submodel(s).

In an embodiment, during the training of the interpretable model, the at least one feature injected in each interpretable submodel differs at each iteration.

In an embodiment, wherein the at least one feature injected in each interpretable submodel is determined by testing a plurality of features that can explain the prediction of the black-box model.

In an embodiment, the at least one feature is a high-level feature, the method comprising the implementation of a third model, said third model being configured to deliver as an output said high-level feature based on a medical image, said third model having been trained on a human labelled dataset.

In an embodiment, the output of the third machine learning model is injected as an input in the interpretable submodel(s).

The present application is also related to a method for obtaining a prediction regarding a physiological state or a biologically or a clinically relevant characteristic of a patient, based on a medical image representing a biological tissue of the patient, the prediction characterizing a predefined outcome said method comprising:
> Providing a medical image of a biological tissue of a patient,
> Injecting said medical image in the black-box model,
> Injecting said medical image in the interpretable model trained according to the method of any of the preceding claims,
> Obtaining the predictions of said black-box and interpretable models.

In an embodiment, said black-box model and interpretable model run in parallel.

### BRIEF DESCRIPTION OF THE DRAWINGS

Embodiments of the invention will be described below with reference to the drawings, described briefly below:
[Fig. 1] illustrates some steps of the method.
[Fig. 2] represents schematically a system for implementing the method according to an embodiment.

In the drawings, identical references designate identical or similar objects.

### DETAILED DESCRIPTION OF THE INVENTION

The invention belongs to the field of machine learning, especially but not limited to the field of deep learning and biology/bioinformatics (i.e., genetics, genomics, transcriptomics, epigenetics, protein and metabolomics) field.

In those fields, a lot of relevant information for the scientist can be found, even extracted from the study of biological tissues (living or dead).

The study of biological tissues can be realized by studying images of biological tissues. Any relevant technique of medical imaging can be used to produce images of biological tissues to study, i.e., images representing in a relatively simple format a large amount of information from a multitude of measurements acquired in a well-defined way.

The method can be applied to any image of biological tissues corresponding to the above definition.

In a particular application, the images may more precisely be histopathological images and/or cytological images.

Based on such images, a machine learning-based model can be trained to deliver as an output an answer to a medical question according to a label relative to a biological characteristic of the biological tissue. More precisely, the answer to the medical question may be an outcome, for which the model is trained to deliver as an output.

The outcome may be:
- a gene mutational status
- a variant in a sequence of nucleotides of a gene,
- a group of variants,
- a gene ontology mutational status,
- a gene pathways mutational status related to the gene,
- a predictive and/or diagnostic morphological signature of a drug or a disease, and/or
- a clinical outcome,
- a clinicohistological outcome.

In a particular embodiment, the outcome may be based on a prediction regarding a response to a treatment for curing a specific disease, such as cancer, and the model is trained to characterize a propensity of the biological tissue to be associated with said outcome.

The outcome may for example be a clinical outcome indicating if the person may survive or live after the treatment. In this embodiment, the outcome may be binary, for example "death" or "survival", or may be a probability regarding the chance of survival of the person after treatment.

In another embodiment, the outcome may be histological, for example the outcome may indicate if at time t=t0+treatment the disease will have evolve. For example, in the case of cancer, the outcome may be indicating that at time t=t0+treatment, where time t0 corresponds to the moment represented on the image, the cancer will have disappeared or spread.

In another embodiment, the outcome may be clinicohistological. For example, the outcome may indicate a risk of relapse.

Then a machine learning-based model may be trained to deliver a prediction regarding one of the above-described outcomes.

The machine learning-based model may be a classification model.

In statistics and computer area, classification is the problem of identifying which of a set of categories or classes an observation (or observations) or an event belongs to. The observation or the event is relative to a system.

It is understood that, here, the term "system" always refers to a physical system, i.e. a functional unit whose parts are interconnected and exchange matter, energy, or information. In particular, in the medicine, biological or anatomical area, a system is a group of organs or tissues with the same structure, participating in the same function, constituting a biological entity. As an example, a system can be a biological tissue of an organ, a subset of cells or a cell.

To allow the event to be classified, its characteristics have to be acquired.

These characteristics are physical characteristics of the system and, thus, the real value, and *in fine* the variations over time, of the time variables can be measured, captured and/or acquired by sensors, measurement systems, capture systems and/or acquisition systems adapted to detect and measure these values over time.

Applied to a biological tissue of an organ, a subset of cells or a cell, it is possible that the characteristic of the observation or event be a measurement or a sample a biological tissue of an organ, a subset of cells or a cell acquired by an acquisition system according to an acquisition method and/or biologically treated by a biological treatment system according to a biological treatment method.

In addition, this measurement or sample of a biological tissue of an organ, a subset of cells or a cell can then be itself captured by image/video acquisition system leading to image or video of the observation or by measurement acquisition system leading to measured data of the characteristic of the observation.

Such image can be referred to as a medical image as it represents a measurement or a sample a biological tissue of an organ, a subset of cells or a cell.

For example, the acquisition method and/or the biological treatment method of the input sample can comprise:
- an acquisition or sampling process;
- a fixation process to preserve the structure and the hardening of the tissue;
- an inclusion process to obtain a block inside which the sample is included;
- a cut process to obtain slides of the block; and/or
- a coloration process.

The acquired image may be a technical data as it is acquired by an image acquisition system according to an image acquisition method and/or digitally processed by digital image processing system according to a digital image processing method.

For example, the image acquisition method and/or the digital image processing method of the input image comprises four sequential parts: image acquisition (scanning), storage, editing, and display of images. The image acquisition method and/or the digital image processing method of the input image depends on the parameters of four main components: light source, slide stage, objective lenses, and a high-resolution camera for image capture.

Applied to technical data, and especially to medical image - classification model in its broadest meaning is an algorithm, i.e. a set of steps, by which an entry data can be classified into a class, also called a label or an outcome, defined according to a classification system or classification architecture or classification structure.

Classification and clustering are examples of the more general problem of pattern recognition, which is the assignment of some sort of output value to a given input value. The input value derived from the measurement acquired or from the image of those measurement as described above.

To ensure this assignment of some sort of output value to a given input value derived from data, classification models are built or designed and implemented on the input value representing the input data of the classification model.

From a very general point of view, it is possible to divide the classification model into two categories: the rules-based models and the deep learning models.

A classification model can be a rules-based model where the different features or characteristic according to which the classification is made, i.e. the different classes are defined, are known, and used to build the classification model.

A rules-based model can be very complex but as the rules are defined by a developer for conceiving the model, the output of model is fully explainable by its developer. A rules-based model is human being approach and allows an automatization and a complexification of what a human mind can think.

A classification model can also be a deep learning model where the different features or characteristic according to which the classification will be made, i.e. the different classes to be defined, are unknown or not completely known and the training and/or the implementing of classification model allows to define them.

A deep learning model - here a classification deep learning model - does not reproduce, even in a complex way, the human mind approach. As the model is defined by itself at least in a little part during the training, the output of the model cannot be fully interpretable nor explainable by its developer.

The present application relates to the technical field of both above-described classification models.

More precisely, a first classification model, being a deep learning model, hereinafter called the black-box model, is trained on a set of medical images to deliver a prediction according to an outcome and a second classification model being a rule-based model, hereinafter called the interpretable model, is trained to imitate the functioning of the first classification model while delivering an interpretable prediction regarding an outcome, the outcomes of the first and second models being the same.

The outcome may be:
- a gene mutational status,
- a gene presence,
- a variant in a sequence of nucleotides of a gene,
- a group of variants,
- a gene ontology mutational status,
- a gene pathways mutational status related to the gene,
- a predictive and/or diagnostic morphological signature of a drug or a disease, and/or.
- a clinical outcome,
- a clinicohistological outcome.

Regarding the black-box model, deep learning is the study of computer algorithms that can improve automatically through experience and by the use of data. It is seen as a part of artificial intelligence. Deep learning algorithms build a model based on sample data, known as training data or training dataset, in order to make predictions or decisions or classification without being explicitly programmed to do so. Deep learning algorithms are used in a wide variety of applications, such as in medicine, email filtering, speech recognition, and computer vision, where it is difficult or unfeasible to develop conventional algorithms to perform the needed tasks.

Generally, the term "prediction" refers to the output of an algorithm after it has been trained on a historical dataset and applied to new data when forecasting the likelihood of a particular outcome. In some cases, it really does mean that you are predicting a future outcome; other times, though, the "prediction" has to do with a categorization of data (not a future data), where the term "classification" can also be used. In other words, the term "prediction" has to be understood in its broader meaning in the machine learning field or deep learning field. It can refer to classification output, categorization output or any output of a deep learning model.

A black-box model is adapted to determine a classification output according to one or more of a set of classes, when being implemented on an input image, the one or more set of classes being relative to one or more label.

A label corresponds to a relevant characteristic according to which the entry data is classified, for example, "remission" for an image of a cancerous tissue, and the classes corresponds to a classification (determined or not) of the value of this relevant characteristic determined by the model, for example "0" or "1" if the output of model is a binary output with "0" meaning that the tissue is not in remission and "1" meaning that the tissue is.

In the latter example, the classification is very simple: the image is classified into a binary output, i.e. with two classes relative to one label.

However, depending on the label, the classes can be numerous.

For example, if the output, i.e. the prediction, indicates a percentage of risk of relapse, there can be several classes such as "10%", "30%", "100%", etc.

Here, in the context of the invention, the black-box model is designed to be implemented on a medical image, which is therefore the input image of the black-box model. It means that the input data of the black-box model is a medical image.

In addition, this medical image represents a measurement of an input biological characteristic of an organ or a biological sample of a tissue of an organ. This measurement is therefore the input measurement, and the corresponding biological characteristic is the input characteristic. Otherwise, the medical image can represent a biological sample of a tissue of an organ, and, in this case, this sample is the input biological sample.

Here, the data training space is an image training space, and it refers to a collection of images adapted to train the black-box model. As the black-box model is designed to be implemented on an input medical image an image training space of the black-box model comprises images representing a measurement of an input biological characteristic of an organ or a biological sample of a tissue of an organ. Those images are the "training examples" of the black-box model and they are comprised, by definition, in the image training space.

The collection of images may comprise a plurality of images representative of an organ of one person. For example, the images may have been taken at different time intervals such that the plurality of images represents an evolution of a state of the organ, and/or may have represent the same organ according to different point of view.

The images may otherwise comprise a plurality of images representative of an organ of a plurality of persons. This makes it possible to diversify the date used to train the model, resulting in a more robust model.

Also, the plurality of medical data may comprise the plurality of images representative of an organ of one person and the plurality of images representative of an organ of a plurality of persons. The training set may therefore be even more robust.

In the field of predicting an outcome, and more specifically in predicting an outcome having to do with a disease such as a response to a cancer treatment, by a black-box model, some images may represent the organ of a person before a treatment and after a treatment. Also, when images of a plurality of persons are used, the medical images may not be representative of the same stage for all the persons. For example, for some persons the image will be representative of a particular stage of the cancer, while for other persons, the image will be representative of a latter or earlier stage of the cancer.

Advantageously, a date training space is formed for the same organ, for example the breast. Hence, if it is willing to train the black-box model on another organ, a different training set will be required where the provided medical images are representative of said another organ.

Advantageously, all the medical images are taken before any treatment.

The medical images may be divided into tiles of a predetermined size before being injected in the model. Indeed, if the entire image was injected in the model, it could be too big and complex to allow an accurate prediction. Furthermore, it would allow to limit the time needed to analyse the image and to allow the model. In an example, the tiles are squared, and their side may be comprised between 200 and 1200 pixels.

The medical images, as well as the input medical images, may also be subjected to image pre-processing further to their division into tiles. Such image processing may be performed on the medical images before they are injected in the model. The pre-processing can be made before the division of the medical images into tiles. Such image pre-processing can include:
- Normalization processing to limit the variability of the input data and therefore provide a more robust model.
- Adjusting the coloration intensity,
- Duplicating the image and applying different characteristic to each (for example colours, noise, etc),
- Withdrawing the background of the image.

The black-box model is then trained to be able to classify the input image into the one or more set of classes being relative to the outcome.

As stated above, the images of the data training space and the input medical images are divided into tiles. The black-box model is more precisely configured to output a prediction regarding the outcome. As stated above, the prediction may be a probability of the outcome to happen. The prediction outputted by the black-box model is called hereinafter the reference score.

In an embodiment, a prediction, i.e. a score, can be associated to each tile of the medical images.

In this embodiment, the reference score can be obtained by aggregating each score, according to several methods such as using usual operators (mean, maximum, minimum, median, percentile), by a machine learning model on a distribution histogram, using fuzzy integral operators (Choquet integral, Sugeno integral, etc), and/or by using attention-based operators (AttentionMIL).

Based on the reference score outputted by the black-box model, the pathologist is able to inform the patient about the outcome.

As an example, the black-box model may deliver, as an output, that the percentage of chance that the patient will be in remission after a treatment is of 60%.

Such a black-box model usually is very accurate in delivering predictions; however, a major drawback of such model is that they may be too sensitive to variabilities in data, leading to deviant prediction and that they act as a black box. Hence, the user cannot know and/or explain why a particular prediction is outputted by the model, especially when it seems inaccurate. This may be a huge issue in the medical field since the pathologist needs to be certain of the answer to the medical question. There is then a need to provide a machine learning-based model as accurate as the classification model but allowing to deliver an interpretable and/or explainable prediction so the pathologist will be able to determine the outcome accurately.

Generally, the interpretability is characterized by a "top-down" approach, where the relation from the output to the input can be described. The interpretability involves providing information that represents both the reasoning of the deep learning algorithm and the internal representation of the data in a format that can be interpreted by a deep learning expert or data expert. The result provided is strongly linked to the data used and requires knowledge of these but also of the model.

Generally, the explainability is characterized by a "bottom-up" approach, where the output can be step by step described from the input. The explainability consists in providing information in a complete semantic format that is self-sufficient and accessible to a user (such as a pathologist), whether new or technophile, and regardless of their expertise in Machine Learning.

Here, the present application proposes to train a second classification model (hereafter called the interpretable model), said interpretable model being a rule-based model.

The interpretable model may be trained according to an iterative characterization of residuals method.

More precisely, the interpretable model is composed by multiple interpretable submodels based on simple high-level or low-level features.

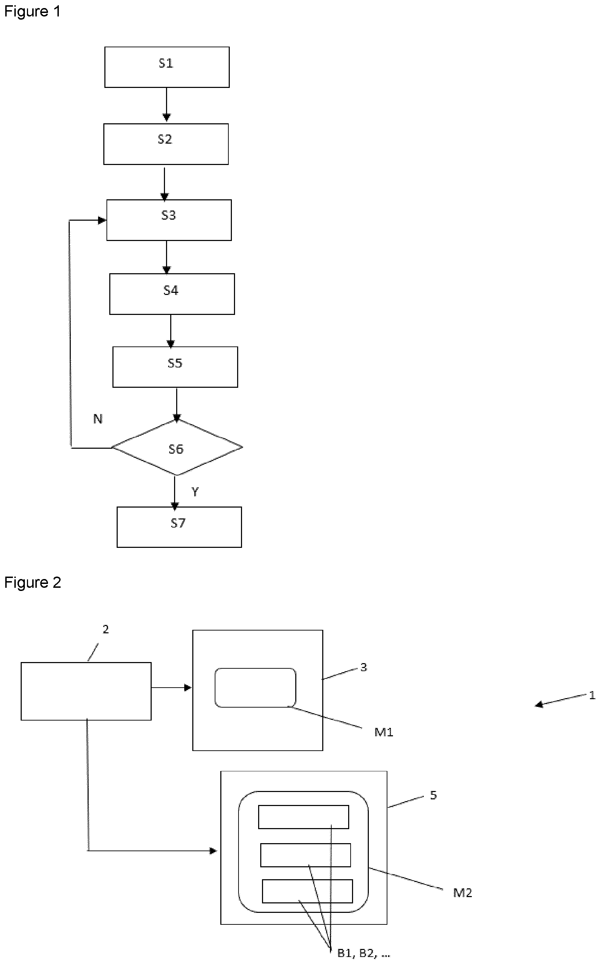

The training of the interpretable model is divided into several steps that can be performed iteratively. Some steps of the training are illustrated on figure 1.

At step S1, a features selection is performed, during which a first subset of relevant features is selected. The features of the first subset of relevant features aim to be the features that allow to explain/interpret the best the prediction of the black-box model regarding the outcome.

A step S2 of training a first interpretable submodel is implemented with a set of medical images and the first subset of relevant features, where the set of medical images comprise at least in part the data injected in the first model during its training, i.e. at least some of the medical images divided in tiles of the set of medical images of the first model. Advantageously the set of medical images used to train the black-box model and the interpretable model is the same for both.

The images of the set of medical images may also be pre-processed as explained above with reference to the black-box model.

The first interpretable submodel is trained to deliver, as an output, the same prediction as made by the black-box model. The output of the first interpretable submodel is then a, called the first interpretable score, that may allow to determine the outcome, the outcome being the same as described above.

A step S3 is implemented, comprising the determination of a residual between the first interpretable score and the reference score outputted by the black-box model. The residual is the difference between the interpretable score and the reference score.

The residual is obtained by running in parallel the black-box model and the interpretable model.

At step S4, the residual and another subset of relevant features are injected in a second interpretable submodel which is then trained to deliver, as an output, the previous residual.

A step S5 of aggregating the first interpretable submodel and the second interpretable submodel is then performed.

At step S6, steps S3 to S5 are iteratively performed until a predefined criterion is met. At each iteration, a subset of relevant features is injected in a different interpretable submodel, as well as the residual obtained at the previous iteration.

It follows from what stated above that the subset of features injected as an input of the currently trained interpretable submodel (or of the currently trained aggregated interpretable submodels) allows to explain the residual of the previous iteration. Indeed, at each iteration, the subset of features is chosen so as to obtain a residual that is inferior to the residual obtained at the previous iteration.

At each iteration, the features of the current subset of features used to train a interpretable submodel (or the aggregated interpretable submodels) are characterized as numeric biomarker explaining/allowing to interpret the output of the interpretable submodel at the current iteration.

Once the criterion is met, the trained interpretable model is obtained and stored at step S7.

Hereinafter is described a more detailed embodiment of the training of the second model. Generally speaking, the interpretable model is trained on the same set of medical images as the black-box model to deliver an output, the output being, as for the black-box model, a prediction regarding a particular outcome.

More particularly, the interpretable model is formed by the aggregation of a plurality of interpretable submodels that are trained a stacked together once trained.

Each interpretable submodel is configured to be trained with the tiles of the training set of medical images to deliver, a prediction, i.e. a score. A score is associated to each tile of the medical images regarding the prediction outputted. Each score is aggregated to obtain a global score, called an interpretable score.

The interpretable submodels are further trained with features, said features being injected in said interpretable submodels together with the set of medical images such that the interpretable score is associated with the injected features.

In details, the training comprises a first step of features selection during which a first subset of relevant features is selected. The features of the first subset of relevant features aim to be the features that allow to explain/interpret the prediction.

The first subset of relevant features may comprise between 1 feature and 10 features, such that the interpretable model will be easily interpretable after the first iteration. This range is solely given as an illustration and more features may be used.

The features selection can be performed according to the embodiments described below.

In a first embodiment, the first subset of relevant features may be selected to include only the most relevant features among a set of known features that can be used to explain/interpret the prediction. The known features can include (but not limited to)
- image processing features relative to the tile of the image, such as Fourier transform, contour detections, the mean and/or standard deviation of a colour etc., and/or
- features expressed in human language (known as high-level features), such as cell clusters, high nucleocytoplasmic ratio, atypical nucleus, etc. In this case, the feature is much more expressive/interpretable, but less precise. In this case, to transform a human-defined feature into a computer-defined feature, a third model must be trained to predict that same feature.

More precisely, the third model may specifically be trained to define a high-level feature, by outputting a feature associated with a score, for example comprised between 0 and 1 (e.g. what is the probability between 0 and 1 that the nucleus of the cell visible on the medical image is atypical). The third model then allows to convert human language into computer language. The output of the third model may be a simplex, i.e. a vector with positive values and whose sum of values is equal to 1. The output of the third model may be used as an input of the second model.

For each human-defined feature, such a third model may be implemented. Hence, there may be a family of models comprising as many models as there are human-defined features that have to be expressed in computer language.

The most relevant features may be determined by a test phase during which the known features are tested relatively to the prediction of the black-box model to determine which one statistically explain better said prediction than the other known features. To perform the testing, several methods may be used such as, but not limited to: statistical functions, such as Bayesian Information Criterion (BIC) or Akaike Information Criterion (AIC) using a machine learning model testing which feature brings information when using them in a machine learning prediction task, correlation score (pearson rho) method, correlation p-value method, mutual information score method, ...

Such testing may result in a coefficient of determination, one coefficient of determination being associated to each tested features, the feature(s) to which the highest coefficient determination(s) is(are) associated being the most relevant feature(s) to be injected in the interpretable model during the first iteration.

In a second embodiment, combinable with the previous embodiment, the first subset of relevant features may be obtained by feature engineering. More precisely, the first subset of relevant features may be obtained by creating new features, for example by combining several known features, or by transforming known features. The known features may be the above-described known features.

Any other suitable techniques can be used to select the first subset of relevant features.

At the end of the first step, the output of the first interpretable submodel, where the output is the interpretable score, is associated to the first subset of relevant features. The output of the first interpretable submodel then becomes a biomarker.

The training then comprises a second step during which the reference score and the interpretable score are compared to obtain a residual. The residual is to be understood in its statistic definition, i.e. the residual is the difference between an observed value and an estimated value of a quantity of interest in a regression.

In the statistics field, the residual may be defined as a non-explainable difference between a prediction and a true value in a regression.

The residual may be obtained by subtracting the reference score and the interpretable score.

In the present case, the residual is the non-explainable difference between the prediction of the black-box model and the prediction of the first interpretable submodel.

As stated above, the interpretable model aims to be interpretable and/or explainable and is trained to imitate the behaviour of the black-box model. Hence the output of the trained interpretable model may by as closest as possible to - ideally the same as- the output of the black-box model. However, an interpretable model, in its general definition, generally is less accurate in the prediction, hence the residual.

A third step is then implemented, during which another interpretable submodel is trained with the residual.

The features of the second subset of relevant features may be selected in the same way as described above referring to the features selection of the first subset of relevant features.

In an embodiment, the second subset of relevant features does not comprise the features of the first subset of relevant features.

However, feature engineering can be applied on the features of the first subset of relevant features, such that the second subset of relevant features may comprised transformed features of the first subset of relevant features.

In an embodiment, the second subset of relevant features may comprise all or part of the features of the first subset of relevant features.

Advantageously, the number of features of the second subset of relevant features is limited to allow an easy interpretation of the result. In a non-limitative example, the second subset of relevant features comprises between 1 and 10 features.

The second interpretable submodel is then trained to deliver, as an output, a residual. The output of the second interpretable submodel is further associated with the second subset of features.

The output of the second interpretable submodel is then characterized as a biomarker.

The training method is then iteratively performed with the training of another interpretable submodel with another subset of relevant features, as explained above until the criterion is met.

At each iteration, the interpretable submodels that have been trained are aggregated to one another.

The aggregation can be performed according to several known methods.

For example, the aggregation method may be a statistical aggregation method such as mean, percentile, and/robust mean. The aggregation method may be fuzzy integrals method such as Sugeno method and/or Choquet method. Alternatively, the aggregation method can be made by a machine learning method such as a histogram-based method, a spatial-based method, a tissue-type-based method and/or attention-based method. Any other suitable aggregation method can be used.

Such criterion may comprise a percentage of explainability that is met (for example 80%), or a stagnation in the obtained result (for example if the residual does not decrease more than 1% to 5% between two consecutive iterations), and/or if a statistical function (such as BIC or AIC) does no longer decline.

When the criterion is met, the interpretable model is obtained, the interpretable model being then interpretable and/or explainable thanks to the subset of relevant features associated to each interpretable submodel that have been aggregated during the training.

The above-described training method may be implemented on a system 1, schematically illustrated on figure 2.

The system 1 may comprise a data acquisition module 2, configured to acquire the medical images of a patient, as explained above and a first processor 3 configured to implement the trained black-box model M 1.

The system 1 may comprise a second processor 5 configured to implement the trained interpretable model M2. As visible on the figure, the trained interpretable model M2 comprises a plurality of aggregated interpretable submodels B1, B2, ... which have previously been aggregated as explained with reference to figure 1.

In an embodiment, the first and second processor 3, 5 may be the same processor.

In functioning, the input medical image is injected into the second processor 5 that implements the trained interpretable model to obtain as an output a prediction regarding the outcome.

It is understood that, once the interpretable model has been trained, it may be used together with the black-box model.

## Claims

1. Method for training an interpretable model, said interpretable model being trained to deliver, as an output, a prediction regarding a physiological state or a biologically or a clinically relevant characteristic of a patient, based on a medical image representing a biological tissue of the patient, the prediction characterizing a predefined outcome, the method comprising:
> Providing a plurality of medical images of the biological tissue,
> Training a black-box model, said black-box model being a deep learning model, said training being performed by injecting a plurality of medical images into said black-box model, wherein said black-box model is trained to deliver, as an output, said prediction, said prediction being a reference score, wherein said reference score characterizes a propensity of the biological tissue to be associated with said outcome,
> Training said interpretable model, said interpretable being a rule-based classification model, said interpretable model being trained to deliver, as an output, said prediction wherein said prediction is an interpretable score corresponding to said reference score, wherein said training of said interpretable model comprises:
∘ A. Determining at least one feature characterizing the prediction of said black-box model,
∘ B. Injecting said plurality of medical images in a first interpretable submodel,
∘ C. Injecting said at least one feature together with said plurality of images in said first interpretable submodel,
∘ D. Obtaining, as an output, said interpretable score,
∘ E. Determining a residual between the interpretable score and the reference score,
∘ F. Injecting said residual, said plurality of medical images and at least one feature characterizing the prediction of said black-box model into another interpretable submodel to obtain another residual,
∘ G: aggregating said first and other interpretable submodels, and
∘ H: iteratively performing steps F and G by training a plurality of interpretable submodels until a criterion is met, wherein at each iteration, the residual injected in the currently trained interpretable submodel corresponds to the residual obtained at the previous iteration,
> Storing the trained second classification model.

2. Method according to claim 1, wherein prior to being injected in the black-box and submodel(s), the medical images are divided into tiles.

3. Method according to claim 2, wherein
> A score is associated to each tile of the medical images injected in the interpretable submodel(s); each score being aggregated to obtain the output of each interpretable submodels.

4. Method according to any of the preceding claims, wherein the outcome comprises:
> A gene mutational status,
> a gene presence,
> - a variant in a sequence of nucleotides of a gene,
> - a group of variants,
> - a gene ontology mutational status,
> - a gene pathways mutational status related to the gene,
> - a predictive and/or diagnostic morphological signature of a drug or a disease,
> - a clinical outcome indicating if the patient will die or survive after a treatment,
> - a clinicohistological outcome indicating if there will be a relapse after a disease treatment, and/or
> A histological outcome indicating if a disease will have spread or disappeared after treatment.

5. Method according to any of the preceding claims, wherein the criterion is:
a percentage of explainability that is met, for example 80%,
a stagnation in the obtained predictions, i.e. if the residual does not increase more than a predefined percentage between two consecutive iterations,
and/or if a statistical function (such as BIC or AIC) does no longer decline, said statistical function being associated with the iterative predictions of the interpretable submodel(s).

6. Method according to any of the preceding claims, wherein, during the training of the interpretable model, the at least one feature injected in each interpretable submodel differs at each iteration.

7. Method according to any of the preceding claims, wherein the at least one feature injected in each interpretable submodel is determined by testing a plurality of features that can explain the prediction of the black-box model.

8. Method according to any of the preceding claims, wherein the at least one feature is a high-level feature, the method comprising the implementation of a third model, said third model being configured to deliver as an output said high-level feature based on a medical image, said third model having been trained on a human labelled dataset.

9. Method according to the preceding claim, wherein the output of the third machine learning model is injected as an input in the interpretable submodel(s).

10. Method for obtaining a prediction regarding a physiological state or a biologically or a clinically relevant characteristic of a patient, based on a medical image representing a biological tissue of the patient, the prediction characterizing a predefined outcome said method comprising:
> Providing a medical image of a biological tissue of a patient,
> Injecting said medical image in the black-box model,
> Injecting said medical image in the interpretable model trained according to the method of any of the preceding claims,
> Obtaining the predictions of said black-box and interpretable models.

11. Method for obtaining a prediction regarding a physiological state or a biologically or a clinically relevant characteristic of a patient according to the preceding claim, wherein said black-box model and interpretable model run in parallel.
